# EUROPEAN PATENT APPLICATION

(11) **EP 4 488 905 A1**
(43) Date of publication of application: **08.01.2025**
(21) Application number: 23382683.3
(22) Date of filing: 03.07.2023
(51) Int. Cl.: G06Q 10/087, G01S 5/04, G01S 5/06

(54) **ROTARY ANTENNA ASSEMBLY FOR INVENTORY TAKING**

(71) Applicant: Keonn Technologies S.L., 08030 Barcelona (ES)
(72) Inventor: JUEZ DUESO, Alejandro, 08030 Barcelona (ES); VIVES PRAT, Ausias, 08030 Barcelona (ES); POUS ANDRÉS, Rafael, 08030 Barcelona (ES); DE PORRATA-DORIA I YAGÜE, Ramir, 08030 Barcelona (ES)
(74) Representative: Elion IP, S.L.

(57) **Abstract**

A method comprising: commanding rotation of at least one antenna of each antenna assembly of at least one antenna assembly around at least one rotation axis so as to capture radio waves with radio-frequency identification, RFID, data reaching the respective antenna assembly from several directions; processing, for each RFID data of the captured radio waves, each of: the RFID data to identify a transmitter tag thereof; an RSSI and/or a received signal phase and/or a read count included in a data packet that comprises the RFID data; and an angle or a set of angles of the antenna or antennas of the at least one antenna when capturing the radio waves with the RFID data; based on the processing, estimating a location or updating an estimated location of each transmitter tag whose RFID data has been processed; and updating an inventory of the transmitter tags based on the processing and the estimating steps.

## Description

### TECHNICAL FIELD

The present disclosure relates to inventory taking, i.e., stock-taking. More particularly, the present disclosure relates to the controlled use of one or more rotary antennas for detection and estimation of position of RFID tags associated with objects within a given space.

### BACKGROUND

Keeping track of objects, especially in large facilities like warehouses, has always been a cumbersome and time-consuming task. The resources required for inventory taking become larger the larger the facilities are. On top of that, the complexity of keeping track of the objects within a given space increases whenever not only the number of units of each object is registered, but the position thereof is also to be registered so that retrieval of the object when desired is carried out quickly. Even when there is a good organization within the facilities for placing the objects in one location or another, it can happen that objects get misplaced.

The use of RFID tags has simplified inventory taking owing to the possibility of interrogating, with short-range wireless communications, the tags associated with objects to get to know if the objects are within the facilities. Notwithstanding, existing limitations of RFID tags in terms of both the range of their radiated electromagnetic waves, and the propagation issues of electromagnetic waves that cause the interrogation not to reach the RFID tag or the response of the latter not to reach an RFID reader, are still problematic for inventory taking. Besides, when the position of the RFID tag is to be estimated, the accuracy in the estimated position has room for improvement.

Nowadays, antenna systems formed by multiple antennas interrogating and detecting RFID tags are typically used within facilities where inventory of objects is to be taken and kept updated. Although there have been improvements in the antennas used and the positioning thereof within the facilities to make the systems capable of detecting most RFID tags and estimating positions thereof, the systems feature several limitations when it comes to number of RFID tags within the facilities that are hard to detect, or the number of antennas necessary to cover a given space is high.

There is an interest in improving inventory taking so that at least some of the aforesaid shortcomings are overcome.

### DESCRIPTION

A first aspect relates to a method comprising:
commanding rotation of at least one antenna of each antenna assembly of at least one antenna assembly around at least one rotation axis so as to capture radio waves with radio-frequency identification, RFID, data reaching the respective antenna assembly from several directions;
processing, for each RFID data of the captured radio waves, each of:
   the RFID data to identify a transmitter tag thereof;
   a received signal strength indicator, i.e., RSSI, and/or a received signal phase and/or a read count included in a data packet that comprises the RFID data; and
   an angle or a set of angles of the antenna or antennas of the at least one antenna when capturing the radio waves with the RFID data;
based on the processing, estimating a location or updating an estimated location of each transmitter tag whose RFID data has been processed; and
updating an inventory of the transmitter tags based on the processing and the estimating steps.

The rotation of the antenna(s) enables to scan a given space, thereby reducing the number of antennas used for tracking objects in the space and increasing the accuracy of the location estimation. The angle or set of angles of the antenna(s) is a piece of data relevant for the estimation of the location as it shows under which angular conditions there has been reception of radio waves corresponding to a given transmitter tag.

The accuracy that the angle or set of angles adds to the location estimation is increased by additionally considering at least one further piece of data from the transmitter tag, which is the RSSI, the signal phase and/or the read count. Any of these data is indicative, to a greater or lesser extent, of the distance that the transmitter tag is from the respective antenna(s) as known in the art. Hence, by combining the reception of radio waves for a given angle or set of angles with such distance-related data, which is applicable to each angle of the set of angles or the only angle (depending on whether the antenna(s) received the radio waves for the transmitter tag in just one angle or in several angles), location may be estimated. To this end, each of said pieces of data that are available for a given transmitter tag are processed to perform the estimation or update an existing estimation. The latter, takes place, for example, when a location has been estimated following a first rotation of one or more antennas, and then the location for the same transmitter tag has been estimated again following a second rotation of the one or more antennas, or a rotation of one or more other antennas. The RFID data is used to determine to whether a given RFID tag has already had its location estimated before or not.

The location may at least comprise data indicative of, e.g., a portion of a cell of the respective assembly or assemblies of the at least one antenna assembly. The cell is that covered by the respective at least one antenna with the rotation thereof around the at least one rotation axis. In such case, the location may include an identification of the portion of the cell where the transmitter tag is. The portion of the cell is part of a surface or a volume that the cell has coverage in. The portion can be greater or smaller depending on the level of accuracy that the location is determined. Alternatively, the location may be, for example, an angular direction or an angular range along which the tag is relative to the antenna assembly, or a set of coordinates where the tag is relative to the antenna assembly, or a set of coordinates where the tag is relative a common set of coordinates for all antenna assemblies, and also a distance or a distance range of the transmitter tag from the antenna assembly or from a common point to all the assemblies. The antenna assembly considered is an antenna assembly (or assemblies) of the antenna or antennas having captured the radio waves based from which the location of the transmitter tag is estimated.

Each antenna assembly of the at least one antenna assembly may be according to the fourth aspect. Each antenna assembly comprises the respective at least one antenna and a respective at least one motor for rotation of the respective at least one antenna. And each antenna of the at least one antenna of each assembly of the at least one antenna assembly is at least linearly polarized, dual-linearly polarized or circularly polarized.

The antenna(s) of the antenna assembly(ies) are rotated by way of a rotating device coupled with the motor, such as, e.g., a rotatable base or support, a robot arm, or any other device known in the art for rotating an apparatus like an antenna. The commanded rotation is preferably such that all antennas of the at least one antenna a same antenna assembly are rotated at once by way of a common rotation device, e.g., a rotatable support having the at least one antenna attached thereto, a robot arm, etc. However, each antenna could be rotated independently from one or more other antennas of the assembly by way of, e.g., a respective rotatable support having the antenna(s) attached thereto, a respective robot arm, etc.

The at least one rotation axis can have a single rotation axis, for example but without limitation, a vertical axis that results in scanning with variable azimuth or a horizontal axis that results in scanning with variable elevation.

The method can be a computer-implemented method that runs in one or more processing devices, in an independent manner and/or in a distributed manner. That is to say, one, some or all steps may be run by a same processing device, or one or some steps may be run by one processing device and some other step or steps may be run by one or more other processing devices or even be run in distributed manner, which means that several processing devices cooperate to run one or more steps. In this sense, the steps are digitally run. The processing device or devices may be included in the at least one antenna assembly itself, and/or be external to the at least one antenna assembly, for example, a processing device such as, but without limitation, a personal computer, a server, a field-programmable gate array, an application specific integrated circuit, etc., and even be remote from the at least one antenna assembly.

The transmitter tags may be active RFID tags, or passive RFID tags, which are more cost-effective. Therefore, in some embodiments, the method further comprises commanding the at least one antenna of each antenna assembly of the at least one antenna assembly to radiate radio waves for interrogation of the transmitter tags.

In some embodiments, the step of commanding the rotation of the at least one antenna of each antenna assembly of the at least one antenna assembly around the at least one rotation axis is further conducted for radiating the radio waves for the interrogation of the transmitter tags.

The rotation may not only be used for capturing radio waves of the transmitter tags, but also for radiating the radio waves towards the transmitter tags so that they are interrogated and, in turn, the transmitter tags capturing such interrogating radio waves proceed to radiate the radio waves for detection by the at least one antenna assembly.

In some cases, one or more antennas in an antenna assembly are used for radiating radio waves, and one or more other antennas in the antenna assembly are used for capturing radio waves. In some other cases, one or more antenna assemblies are configured to radiate radio waves (i.e., the at least one antenna thereof radiates radio waves), and one or more other antenna assemblies are configured to capture radio waves (i.e., the at least one antenna thereof captures radio waves).

In some embodiments, the method further comprises commanding oscillation of one or more antennas of the at least one antenna assembly around a given direction.

When an antenna of an antenna assembly is pointing towards a certain direction, it can oscillate in at least one angle about that direction, which is a fixed position, since such movement can increase read rate and, thus, improve detection of transmitter tags and estimation of direction thereof. An angular oscillation of Δθ (rad) creates, at a distance d, an arc oscillation of I=2·Δθ·d. Even at one meter (most tags are generally further away), an oscillation of 5° to each side creates an arc oscillation of 17cm, which is longer than half the wavelength, and thus creating enough variation to maximize tag reads.

In some embodiments, the at least one antenna assembly comprises two or more antenna assemblies with adjacent or partially overlapping cells. The location of each transmitter tag whose RFID data has been processed following capturing of radio waves by the two or more antenna assemblies is estimated such that the portion of the cell is that partially overlapping or in adjacency between the cells of the two or more antenna assemblies, or by processing all the information obtained by all or some of the antennas of all or some of the antenna assemblies with a triangulation algorithm that estimates the position of the tag.

The portion of the cell corresponding to the estimated location corresponds to that in overlapped or adjacent relationship of the two antenna assemblies having captured radio waves of the transmitter tag. Furthermore, with separate antenna assemblies, a triangulation of the location of the transmitter tag can be carried out by combining the estimated positions by each of those antenna assemblies, or by processing the information related to the reading of the tags (e.g., RSSI, the signal phase and/or the read count) using an algorithm that can obtain a better location estimation than that obtained from a single assembly.

In some embodiments, the method further comprises commanding rotation of one or more particular antennas of the at least one antenna assembly according to one or more given angular values. The one or more particular antennas are preferably the antennas that are closest to a given transmitter tag. The given angular value(s) is computed for the one or more particular antennas to have them rotated such that they are substantially directed to the given transmitter tag. The computation of the given angular value(s) is preferably at least based on the estimated location of the given transmitter tag resulting from the estimating step.

When a given RFID tag needs to be located with maximum precision, at least some, but preferably all, antennas of the at least one antenna assembly can be rotated to maximize, e.g., the power and/or the read count of the reads from that particular tag, and a more precise triangulation can be used to locate the transmitter tag with additional space resolution. The antennas can cooperate to that end. Once an antenna has located the RFID tag (presumably the closest one, but not necessarily), the antenna can share the angular information with the other antenna, which have data about each other's positions, so that they hone in on the target tag faster than if they had no a priori information.

In some embodiments, the commanded rotation is continuous. That is to say, the at least one antenna is rotated without being stopped. In some embodiments, the method further comprises adjusting the rotation to be commanded such that: in a first set of full rotations, the full rotations are performed at a first angular speed; and in a second set of full rotations, the full rotations are performed at a second angular speed. The first angular speed is smaller than the second angular speed.

The continuous rotations can be made with variable speed so that the at least one antenna goes faster or slower. Such adjustments can be made conditional on the difficulty to detect, i.e., read, transmitter tags, or the number of changes in the inventory that usually take place in short periods of time.

In some embodiments, the commanded rotation is stepped with a plurality of steps per full rotation, thereby making the respective at least one antenna stay, for a period of time, between each pair of consecutive steps of the plurality of steps, wherein each step of the plurality of steps corresponds to a different angle of the at least one antenna relative to the at least one rotation axis.

The stepped rotations allow the intermittent rotation of the at least one antenna so that it can at least capture (and, optionally, radiate) radio waves while being rotated, but preferably during the periods of time during which the at least one antenna is motionless. By staying motionless between each step, multiple reads can be attained by the at least one antenna, thereby improving detection and location estimation of transmitter tags.

In the context of the present disclosure, full rotation refers to producing the entire rotation that the antenna is able to on the rotating device it uses. For example, the antenna may be attached to a base that is only capable of rotating up about one axis to 90° to each side from a center or baseline point, thus the full rotation covers going from, e.g., the angular position of 90° to the angular position of -90°. By way of another example, the antenna may be attached to a base that is capable of rotating in 360° about one axis, thus the full rotation covers an entire revolution. When the at least one rotation axis comprises more than one axis, the full rotation may be considered per rotation axis.

In some embodiments, the method further comprises performing computer vision by processing one or more images of at least one optical sensor, and adjusting the period of time based on the number of objects detected in the processed one or more images.

The stops that the at least one antenna does during the rotation can be made dependent upon the detected presence, in the image(s), of objects. This is so because it takes longer to detect a larger number of RFID tags than a smaller population. Therefore, if there are more objects, it may be preferred to increase the period of time so that the at least one antenna stays motionless for more time or goes slower, to detect RFID tags harder to detect, and vice versa, when there are few objects and/or people, the period of time may be reduced since less time is necessary to detect them.

In some embodiments, adjusting the period of time further comprises detecting people in the processed one or more images, and detecting interactions of people with objects and/or with other people detected in the processed one or more images.

The consideration of how the people is behaving relative to objects and/or other people, e.g., whether the people is touching objects, putting them in bags, walking next to another object or person, going from one location to another, etc., can be used to determine in which areas and in which instants the antennas should be focusing on most, helping to increase the accuracy of the system.

The period of time can be adjusted accordingly so that the at least one antenna stays motionless more or less time depending on the dynamics detected in the processed image(s). To this end, preferably a sequence of images is processed so as to determine how the people is acting over time and, based on that, adjust the period of time.

In some embodiments, the method further comprises adjusting the rotation to be commanded such that: in a first set of full rotations, steps of the plurality of steps have a first angle difference between each pair of consecutive steps and/or the period of time between each pair of consecutive steps has a first time duration; and in a second set of full rotations, steps of the plurality of steps have a second angle difference between each pair of consecutive steps and/or the period of time between each pair of consecutive steps has a second time duration. The first angle difference is smaller than the second angle difference, and the first time duration is longer than the second time duration.

The stepped rotation allows adjustment of the steps and/or the times between them so that, depending on the accuracy with which the locations are to be estimated and/or the number of reads per transmitter tags, the at least one antenna scans the cell with more precision or less, and with higher speed or less.

Such adaptation of the behavior of the at least one antenna to the behavior of the transmitter tags when it comes to detection thereof enables, for example, faster scans when there is a significant number of changes in the inventory in short periods of time and/or when most transmitter tags are easily detected and, on the other hands, slower scans when there are few number of changes in the inventory in short periods of time and/or when there are many transmitter tags difficult to be detected. In sum, the scanning can be finer, i.e., more precise, or coarser, i.e., less precise, depending on the situation.

In some embodiments, the commanding, processing, estimating, and updating steps are conducted a plurality of times such that, a plurality of first commanded full rotations is according to the first set of full rotations, and a plurality of second commanded full rotations is according to the second set of full rotations, with at least one or more second commanded full rotations being subsequent to one or more first commanded full rotations; and the updating step comprises removing the transmitter tags from the inventory whose RFID data has been processed in the one or more first commanded full rotations but not in the one or more second commanded full rotations.

More precise scanning is provided in the first set of full rotations than in the second set of full rotations, but the two are conducted sequentially so that the advantages of each are exploited. In this sense, the more precise scanning is at least used for reference for the removal from the inventory of those RFID tags that are not detected in a subsequent coarser scanning. This is so because the more precise scanning, which takes more time, is to detect more RFID tags than the coarser scanning, hence differences between the two in this fashion are potentially indicative of the tag (and, thus, the object associated therewith) not being within the premises anymore. Of course, if a subsequent scanning detects the RFID tag again, it is again included in the inventory with its new estimated location.

If the transmitter tags are classified in the first or second categories, the transmitter tags to be removed are preferably transmitter tags classified in the second category since those tags are the ones that, if not detected in the coarser scanning, are more likely to not having been detected because they are in fact missing, not because they are hard to detect.

In some embodiments, the method further comprises classifying or updating a classification of the transmitter tags in a first category or a second category depending on whether: a time difference between two radio waves with the RFID data of the respective transmitter tag being consecutively captured is greater than a predetermined time threshold or not; and/or a number of times that radio waves with the RFID tags of the respective transmitter tag are captured is less than a predetermined read count (i.e., the number or times the tag has been read) or read rate (i.e., the number of times per unit of time, e.g., a second, that a tag has been read) threshold or not. The transmitter tags are classified in the first category when the time difference is greater than the predetermined time threshold and/or the number of times is less than the predetermined read count or read rate threshold, and in the second category otherwise.

The first category relates to RFID tags hard to detect whereas the second category relates to RFID tags easy to detect.

In those situations in which a transmitter tag has not been detected during a long time (according to the predetermined time threshold), namely a long time has elapsed between two consecutive radio waves corresponding to that tag (here, consecutive does not mean that they take within a short time span, just that no other radio wave for the same tag has been received between the two radio waves), it is considered that said tag is hard to detect. Also, when there are few radio waves (according to the predetermined read rate or read count threshold) received for a particular RFID tag, it is considered that said tag is hard to detect. The tag is considered to be easy to read otherwise.

In some embodiments, the commanding, processing, estimating, and updating steps are conducted according to the one or more first commanded full rotations when a number of transmitter tags classified in the first category exceeds a predetermined tag threshold in a given observation period.

The whole process of detecting and estimating the location of the transmitter tag, with the subsequent inventory update, is conducted with a finer scanning when the number of hard tags is high (according to the predetermined tag threshold) in a certain period of time. That finer scanning is to reveal most of the hard-to-detect tags if they are still within the premises.

In some embodiments, the commanding, processing, estimating, and updating steps are conducted according to the one or more second commanded full rotations such that two or more second commanded full rotations are performed back-to-back when a time of day is within a predetermined hour range.

Certain buildings or confined spaces have high rates of change in the inventory they have at certain times. By way of example, during the morning, many transporting means are arranged to come pick up goods; by way of another example, during working hours, a store has many changes in its inventory owing to the purchases from the customers and the restocking by the workers.

In these situations, the whole process of detecting and estimating the location of the transmitter tag, with the subsequent inventory update, is conducted with a coarser scanning so that the inventory is more frequently updated even if that means that hard-to-detect tags are missed. What is more, when there is so much movement around the transmitter tags, the different paths followed by the radio waves owing to the different obstacles can lead to the detection of RFID tags hard to detect even with coarser scanning.

In some embodiments, the commanding, processing, estimating, and updating steps are conducted according to the one or more first commanded full rotations when a difference between a number of transmitter tags whose radio waves have been captured in one or more most recent second commanded full rotations and a number of transmitter tags whose radio waves have been captured in one or more most recent first commanded full rotations exceeds a predetermined tag difference.

When there is a significant difference between tags detected in the most recent first and second commanded full rotations, which correspond to finer and coarser scanning, respectively, a finer scanning is conducted so as to determine what is the status of the non-detected tags. Particularly, the finer scanning lets determine whether the transmitter tags that were not detected in the most recent second commanded full rotations are not in the cell(s) of the at least one antenna assembly. If the transmitter tags are still in the cell(s), their location is estimated.

In some embodiments, the at least one rotation axis comprises first and second rotation axes. And the method further comprises commanding rotation of the at least one antenna of each antenna assembly of at least one antenna assembly around the first and second rotation axes, with the second axis not being parallel to the first rotation axis.

The rotation in several axes can be achieved by any means such as, for example, a robot arm. The first rotation axis could be, for example, a vertical axis, thereby letting the antenna assemblies scan with variable azimuth, and the second rotation axis could be, for example, a horizontal axis, thereby letting the antenna assemblies scan with variable elevation.

In some embodiments, the rotation of the at least one antenna is such that the at least one antenna further rotates around an axis thereof.

The rotation of the antenna(s) on its axis, independently of the rotation of the antenna(s) or the antenna assembly(ies) for the scanning, enables to cover all polarizations when the at least one antenna is linearly polarized or dual-linearly polarized.

The at least one antenna can be rotated around its axis while it is rotated for scanning the premises, or the two types of rotations can be conducted sequentially, i.e., each rotation takes place separately.

In some embodiments, each antenna assembly of the at least one antenna assembly is an antenna assembly as described in the fourth aspect.

A second aspect relates to a computing device or system comprising means adapted to execute the steps of a method as described in the first aspect. For example, the computing device or system may comprise at least one processor and at least one memory, both configured to run the steps. The at least one memory includes computer program code or instructions so that the at least one processor can carry out the method. Therefore, the at least one processor at least causes the computing device or system to:
command rotation of at least one antenna of each antenna assembly of at least one antenna assembly around at least one rotation axis so as to capture radio waves with RFID data reaching the respective antenna assembly from several directions;
process, for each RFID data of the captured radio waves, each of:
   the RFID data to identify a transmitter tag thereof;
   a received signal strength indicator, i.e., RSSI, and/or a received signal phase and/or a read count included in a data packet that comprises the RFID data; and
   an angle or a set of angles of the antenna or antennas of the at least one antenna when capturing the radio waves with the RFID data;
estimate a location or update an estimated location, based on the processing, of each transmitter tag whose RFID data has been processed; and
update an inventory of the transmitter tags based on the processing and the estimation.

The computing device or system can control the operation of one or more antenna assemblies such as, for example, those described in the fourth aspect.

Multiple computing devices can be arranged to run the steps of the method of the first aspect according to embodiments thereof, either in an independent or a distributed manner.

A third aspect relates to a computer program comprising instructions which, when the program is executed by at least one computing device, cause the at least one computing device to carry out the steps of a method as described in the first aspect.

A fourth aspect relates to an antenna assembly comprising: at least one antenna; and at least one motor for rotation of the at least one antenna around at least one rotation axis. Each antenna of the at least one antenna is at least linearly polarized, dual-linearly polarized or circularly polarized.

The at least one motor may rotate a device that has the at least one antenna attached thereto, for example, a support, a base, a robot arm, etc. The rotation may or may not be over 360° around at least one rotation axis. In this sense, the rotation of the at least one antenna can go back-and-forth so as to cover the entire path it allows.

The dual-linearly polarization may be preferred over the circular polarization to increase the power with which the RFID tags and/or the at least one antenna capture/s the radio waves.

In some embodiments, the antenna assembly has at least four different linear polarizations, with first and second linear polarizations thereof being perpendicular one another, and third and fourth linear polarizations thereof being perpendicular one another. For example, the third and fourth linear polarizations may be at, e.g., 45° with respect to the first and second linear polarizations.

In some embodiments, the at least one motor comprises first and second motors. The first motor is for rotation of the at least one antenna around a first rotation axis of the at least one rotation axis, and the second motor is for rotation of the at least one antenna around a second rotation axis of the at least one rotation axis, with the first and second rotation axes not being parallel.

In some embodiments, the antenna assembly and/or the at least one antenna are/is configured to rotate the at least one antenna around an axis thereof.

A fifth aspect relates to a system comprising: at least one antenna assembly as described in the fourth aspect; and a computing device or system as described in the second aspect communicatively coupled with each antenna assembly of the at least one antenna assembly.

In some embodiments, the system further comprises a building or a confined space thereof. The building or confined space comprises delimiting walls and/or a delimiting ceiling. Each assembly of the at least one antenna assembly is attached to a wall of the delimiting walls or the delimiting ceiling.

The antenna assembly(ies) is particularly convenient for attachment to walls or ceilings. While being fixedly attached thereto, the antenna(s) of the respective antenna assembly may be made to rotate so as to scan the building or space.

In some embodiments, the at least one antenna assembly comprises a plurality of antenna assemblies. Each assembly of the plurality of antenna assemblies is arranged in the building or confined space such that cells of the plurality of antenna assemblies cover a majority of an area of the building or confined space.

In some embodiments, the system further includes RFID tags such as, e.g., the transmitter tags.

A sixth aspect relates to a computer-readable non-transitory storage medium comprising instructions which, when executed by at least one computing device, cause the at least one computing device to carry out the steps of a method as described in the first aspect.

A seventh aspect relates to a data carrier signal carrying a computer program as described in the third aspect.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figures 1A-1C show a blueprint of a building with a plurality of antenna assemblies in accordance with embodiments.
Figure 2 shows a graph of a detection of RFID tags with a rotary antenna assembly in accordance with embodiments as rotation progresses.
Figure 3 shows a method in accordance with embodiments.
Figure 4 shows a system in accordance with embodiments.

### DETAILED DESCRIPTION

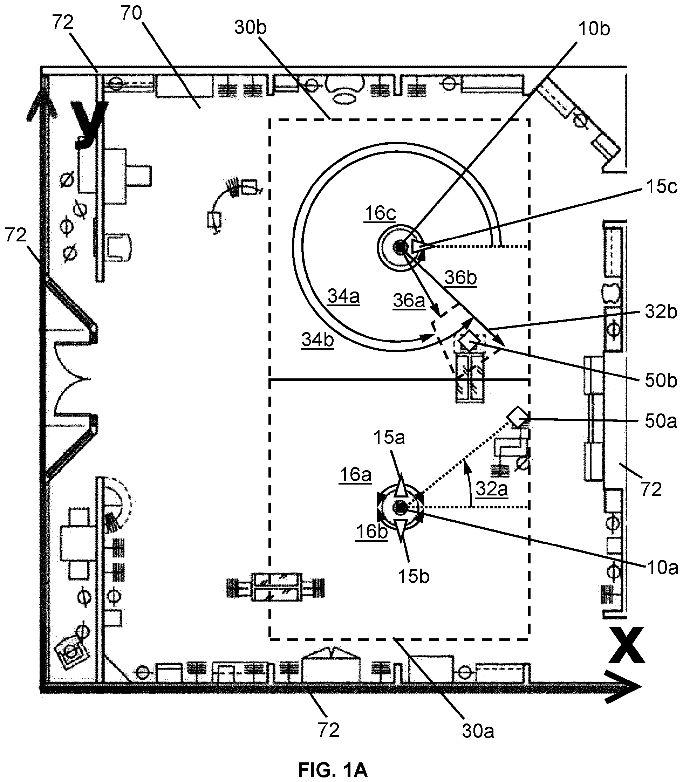

Figure 1A shows a blueprint of a building 70 providing a confined space between walls 72 thereof, and having a plurality of antenna assemblies 10a, 10b in accordance with embodiments arranged, for example, on a ceiling of the room of the blueprint. In other embodiments, only one antenna assembly is provided, or more than two antenna assemblies are provided.

The building 70 has a plurality of objects, some including RFID tags 50a, 50b associated therewith.

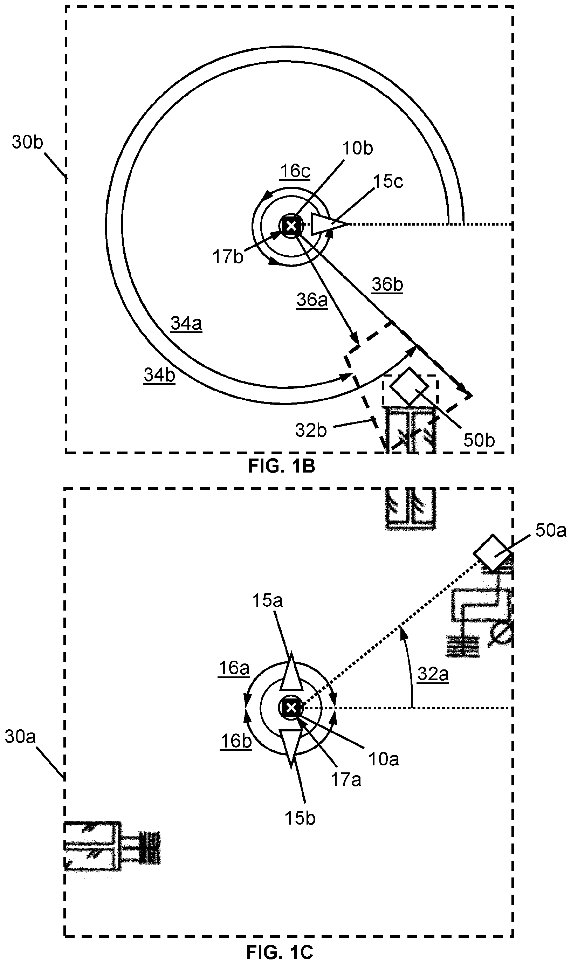

The two antenna assemblies 10a, 10b are apart such that each has a cell 30a, 30b associated therewith that has little overlap with the cell of the other antenna assembly. The cells 30a, 30b have been represented as squares for the sake of the explanation only, it will be noted that the cells are typically circular, even though this ultimately depends on the radiation patterns of the antenna(s) used and, in this case, it also depends on the rotation of the antenna(s). Figures 1B and 1C show cells 30a, 30b zoomed in for the sake of clarity.

The position of the antenna assemblies 10a, 10b is known, and can be represented by, e.g., Cartesian coordinates, for example according to axes x and y illustrated, relative to any position of the building 70 or any other reference.

A first antenna assembly 10a includes two antennas 15a, 15b that are linearly polarized, dual-linearly polarized or circularly polarized. Each of the two antennas 15a, 15b can rotate in at least one rotation axis 17a (shown in Figure 1C), in this case the rotation axis is an axis perpendicular to the x and y axes illustrated, so that scanning is possible in azimuth. The rotation 16a, 16b attainable by each of the two antennas 15a, 15b is of about 180°; this can be because each of the antennas 15a, 15b are rotatable in this manner, or the antenna assembly 10a is rotatable 180°, which makes the antennas 15a, 15b thereof rotate accordingly. Hence, a full rotation 16a, 16b of the antennas 15a, 15b is a sweep from one end to the other end.

A second antenna assembly 10b includes a single antenna 15c that is linearly polarized, dual-linearly polarized or circularly polarized. The antenna 15c can rotate in at least one rotation axis 17b (shown in Figure 1B), for example the same one of antennas 15a, 15b, and complete revolutions are possible since the rotation 16c thereof is of 360°. It is noted that the antenna 15c, upon making a complete revolution, may continue rotating in the same direction or go back in the opposite direction. The rotation 16c can be due to a device that rotates the antenna 15c or the antenna assembly 10b.

A first RFID tag 50a has radio waves thereof captured by an antenna 15a of the first antenna assembly 10a during its rotation process, which may be continuous or stepped. The antenna 15a may have first interrogated the first RFID tag 50a, for example when the RFID tag 50a is passive. The captured radio waves are processed by one or more processing devices that may be part of the antenna assembly 10a or not; in this sense, the one or more processing devices may operate one, some or all antenna assemblies 10a, 10b within the building 70. The position of the antenna 15a, at least in terms of its angle relative to, e.g., a reference point of the antenna assembly 10a is known at all times. When the antenna 15a captures the radio waves, it can associate the data therein with the angle the antenna 15a had each time a radio wave was captured.

By processing the angle values when capturing the radio waves and the data in the radio waves with RFID data of the first RFID tag 50a, location 32a of the first RFID tag 50a is estimated. The estimated location 32a is a portion of the cell 30a relative to a known reference, such as, e.g., the antenna assembly 10a, the antenna 15a, the building 70, etc. In this case, the location 32a is estimated as an angle relative to a reference horizontal axis defined with respect to the antenna assembly 10a. The angle thus defines a direction along which the first RFID tag 50a is from the antenna assembly 10a. A distance or a distance range may also be estimated as part of the location 32a, for example based on RSSI values or read counts in the transmissions of the first RFID tag 50a.

Turning to the antenna 15c of the second antenna assembly 10b, there is a second RFID tag 50b within the cell 30b coverage of the antenna assembly 10b. The antenna 15c is commanded to rotate, and during the rotation (continuous or stepped), it captures radio waves from the second RFID tag 50b (and, optionally, also radiates radio waves for interrogation thereof). As the position of the antenna 15c is known at least in terms of orientation, the angle or angles at which the radio waves were captured are used, together with data in the radio waves, for estimating a location 32b of the second RFID tag 50b. In this case, the portion of the cell 30b of the estimated location 32b is defined by an angular range with angles 34a, 34b, and a distance range with distances 36a, 36b. The overall combination of these ranges yields the portion location 32b.

In some embodiments, an antenna assembly 10a, 10b may potentially capture radio waves of an RFID tag sitting on the cell 30a, 30b of another antenna assembly, yet due to how the waves propagate, a more distant antenna assembly may still capture the waves. In such cases, the same process for estimating the location can be conducted, but further a triangulation can be carried out by (the) one or more processing devices. By combining the estimated locations of the same RFID tag 50a, 50b by different antenna assemblies 10a, 10b, a more accurate estimated location for the RFID tag may be possible.

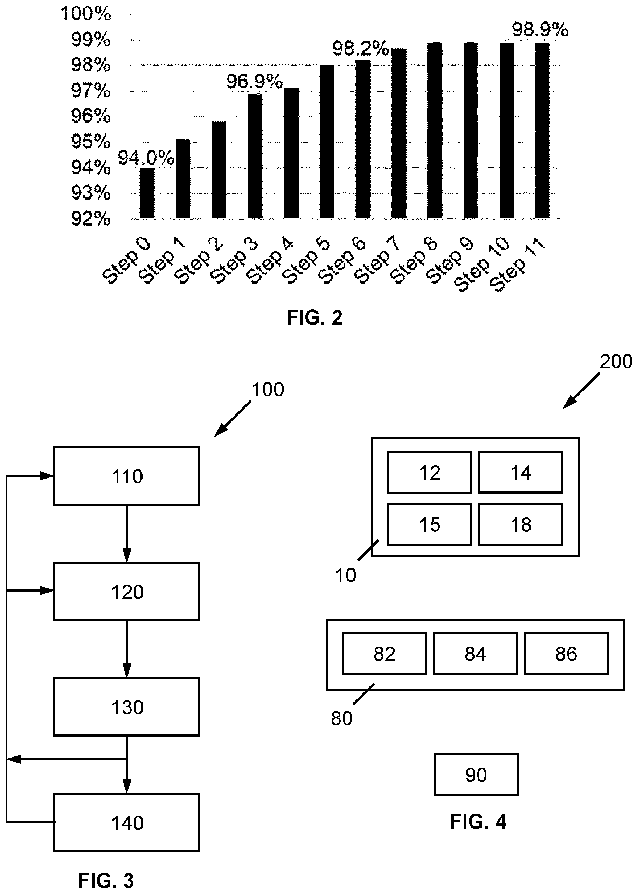

Figure 2 shows a graph of a detection of RFID tags with a rotary antenna assembly in accordance with embodiments as rotation progresses.

In these embodiments, the ETSI Upper frequency band is used for interrogation of RFID tags, but it will be noted that any frequency band for RFID tags can be used instead, and that such other frequency bands likewise fall within the scope of the present disclosure.

The graph shows a stepped rotation for an antenna of an antenna assembly. Particularly, there are twelve steps, which in this case correspond to just a quarter of a cell, i.e., 90° of rotation. In the first position, the antenna assembly has been able to detect up to 94.0% of all RFID tags within that quarter of cell. In the second position of the rotation, the RFID tag detection increases to over 95%. The number keeps increasing with each position for most part of the rotation, when at some point the antenna assembly has detected almost 99% of all RFID tags. It could be that the non-detected RFID tags may be classified as tags hard to detect, and thus other rotation strategy may be used to scan the cell (or quarter thereof, in this case) to try to detect the tags not yet detected.

Figure 3 shows a method 100 in accordance with embodiments.

The method 100 includes a step 110 whereby at least one antenna of at least one antenna assembly is rotated or commanded to be rotated, by providing one or more commands, around at least one rotation axis. The rotation is intended to put the antenna(s) in different directions that enable it to capture radio waves transmitted by RFID tags from different locations.

In some embodiments, the rotation of step 110 is adjustable to how tags are being detected (e.g., many tags are not being read, most tags are being read, etc.) and/or how many changes in inventory there are (e.g., many tags are coming in or leaving the premises during a period of time). At least two types of rotation can be set, e.g., first and second rotations, with one thereof resulting in a more precise scanning that takes more time to perform a full rotation, and another one resulting in a less precise scanning that takes less time to perform a full rotation. The use of one type of rotation over other type(s) of rotation can be set conditional on the results of step 120 and/or step 130.

The method 100 includes a step 120 whereby the at least one antenna captures radio waves, and then, for each RFID data therein, processing is carried out. The data to be processed is at least the orientation of the at least one antenna that captured the radio waves, the identification data of the RFID tag, and one or more from the following: an RSSI, a received signal phase and a read count.

The method 100 includes a step 130 whereby the location of RFID tags, for which radio waves have been captured, is estimated, or its estimated location is updated with a more recent estimation. For that, the data processed in step 120 is used as it allows to retrieve a potential angular location and a potential distance of the RFID tag to the at least one antenna and, thus, to the antenna assembly thereof.

The method 100 includes a step 140 whereby an inventory of RFID tags is updated according to the data processed in step 130 and the location estimated in step 140. The inventory can be updated in a database, for example, in a local server, in the cloud, etc.

The inventory update may not be conducted every time there is a new or more recent location estimation and be run at regular intervals or every time there are a certain number of records to be updated. In this regard, after estimating the location of RFID tags in step 130, but it could also be after updating the inventory, the method 100 may carry out again the capturing of radio waves and processing data accordingly as in step 120, and/or rotate or command to rotate the at least one antenna as in step 110 for further scanning the premises for more RFID tags.

Figure 4 shows a system 200 in accordance with embodiments.

The system 200 includes one or more antenna assemblies 10, and one or more computing devices or systems 80. In these embodiments, the system 200 also includes at least one optical device 90.

The one or more computing devices or systems 80 may be part of the one or more antenna assemblies 10, or be remote from the antenna assembly(ies) 10 while being communicatively coupled therewith.

Each antenna assembly 10 includes at least one motor 12, one or more rotating devices 14, at least one antenna 15 and a means for data transmission and reception 18 like, for example, a wired or a wireless data communications module. The rotating device(s) 14, which can be any member that can be rotated owing to the at least one motor, e.g., a base, a plate, a robot arm, etc., has the at least one antenna 15 attached thereto. A same rotating device 14 can be used for rotation around two or more rotation axes, or multiple rotating devices 14 are arranged to that end. Further, each antenna 15 can be rotated independently from other antennas 15, or all antennas 15 be rotated in the same manner if they all are attached to the same rotating device 14.

Each computing device or system 80 includes at least one processor 82, at least one memory 84, and means for data transmission and reception 86 like, for example, a wired or a wireless data communications module. The at least one memory 84 stores, either temporarily (e.g., upon retrieval for an external server) or permanently, computer program code configured to conduct steps of a method in accordance with the present disclosure, for example the method 100 of Figure 3.

The computing devices or systems 80 exchanges data with the antenna assembly 10 by way of the respective means for data transmission and reception 18, 86.

One or more computing devices or systems 80 may be provided for keeping an inventory of RFID tags and, optionally, the objects that are associated with the RFID tags. Such computing device(s) or system(s) 80 may be included in the at least one antenna assembly 10, but is preferably external to it for enabling easier access to the inventory and easing scaling of an inventory taking system.

When there is at least one optical device 90, the one or more computing devices or systems 80 may retrieve images therefrom, either as still images or video footage, or information obtained by the at least one optical device 90 upon performing computer vision on the images. Regarding the latter, the at least one optical device 90 may include a computing device or system 80 as well with computer program code stored in the respective at least one memory 84 configured to perform computer vision. The at least one optical device 90 may likewise include means for data transmission and reception 18 like, for example, a wired or a wireless data communications module.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method (100) comprising:
commanding (110) rotation (16a-16c) of at least one antenna (15) of each antenna assembly of at least one antenna assembly (10) around at least one rotation axis (17a, 17b) so as to capture radio waves with radio-frequency identification, RFID, data reaching the respective antenna assembly from several directions, wherein each assembly of the at least one antenna assembly comprises the at least one antenna and is configured for rotation of the respective at least one antenna;
processing (120), for each RFID data of the captured radio waves, each of:
the RFID data to identify a transmitter tag (50a,50b) thereof;
a received signal strength indicator and/or a received signal phase and/or a read count included in a data packet that comprises the RFID data; and
an angle or a set of angles (32a,34a,34b) of the antenna or antennas of the at least one antenna when capturing the radio waves with the RFID data;
based on the processing, estimating (130) a location (32a,32b) or updating an estimated location of each transmitter tag whose RFID data has been processed, wherein the location at least comprises data indicative of a portion of a cell (30a,30b) of the respective assembly or assemblies of the at least one antenna assembly, wherein the cell is that covered by the respective at least one antenna with the rotation thereof around the at least one rotation axis; and
updating (140) an inventory of the transmitter tags based on the processing and the estimating steps.

2. The method (100) of claim 1, wherein the at least one antenna assembly (10) comprises two or more antenna assemblies with adjacent or partially overlapping cells (30a,30b); and wherein the location (32a,32b) of each transmitter tag (50a,50b) whose RFID data has been processed following capturing of radio waves by the two or more antenna assemblies is estimated such that the portion of the cell is that partially overlapping or in adjacency between the cells of the two or more antenna assemblies, or by processing all the information obtained by all or some of the antennas of all or some of the antenna assemblies with a triangulation algorithm that estimates the position of the tag.

3. The method (100) of any one of the preceding claims, further comprising commanding oscillation of one or more antennas (15) of the at least one antenna assembly (10) around a given direction.

4. The method (100) of any one of the preceding claims, further comprising commanding rotation (16a-16c) of one or more particular antennas (15) of the at least one antenna assembly (10) according to one or more given angular values, the one or more particular antennas being the antenna or antennas of the at least one antenna that are closest to a given transmitter tag (50a,50b), the one or more given angular values being computed for the one or more particular antennas to have them rotated such that they are substantially directed to the given transmitter tag, and the computation of the one or more given angular value being at least based on the estimated location (32a,32b) of the given transmitter tag resulting from the estimating (130) step.

5. The method (100) of any one of the preceding claims, wherein the commanded (110) rotation (16a-16c) is stepped with a plurality of steps per full rotation, thereby making the respective at least one antenna (15) stay, for a period of time, between each pair of consecutive steps of the plurality of steps, wherein each step of the plurality of steps corresponds to a different angle of the at least one antenna relative to the at least one rotation axis (17a, 17b).

6. The method (100) of claim 5, further comprising performing computer vision by processing one or more images of at least one optical sensor (90), and adjusting the period of time, based on the number of objects detected in the processed one or more images, detecting people in the processed one or more images, and detecting interactions between the people and the objects.

7. The method (100) of any one of claims 5-6, further comprising adjusting the rotation (16a-16c) to be commanded (110) such that:
in a first set of full rotations, steps of the plurality of steps have a first angle difference between each pair of consecutive steps and/or the period of time between each pair of consecutive steps has a first time duration; and
in a second set of full rotations, steps of the plurality of steps have a second angle difference between each pair of consecutive steps and/or the period of time between each pair of consecutive steps has a second time duration;
wherein the first angle difference is smaller than the second angle difference, and the first time duration is longer than the second time duration.

8. The method (100) of claim 7, wherein:
the commanding (110), processing (120), estimating (130), and updating (140) steps are conducted a plurality of times such that, a plurality of first commanded full rotations is according to the first set of full rotations, and a plurality of second commanded full rotations is according to the second set of full rotations, wherein at least one or more second commanded full rotations are subsequent to one or more first commanded full rotations; and
the updating step comprises removing the transmitter tags (50a,50b) from the inventory whose RFID data has been processed in the one or more first commanded full rotations but not in the one or more second commanded full rotations.

9. The method (100) of any one of the preceding claims, further comprising classifying or updating a classification of the transmitter tags (50a,50b) in a first category or a second category depending on whether:
a time difference between two radio waves with the RFID data of the respective transmitter tag being consecutively captured is greater than a predetermined time threshold or not; and/or
a number of times that radio waves with the RFID tags of the respective transmitter tag are captured is less than a predetermined read count or read rate threshold or not;
wherein the transmitter tags are classified in the first category when the time difference is greater than the predetermined time threshold and/or the number of times is less than the predetermined read count or read rate threshold, and in the second category otherwise.

10. The method (100) of claim 9 when depending upon claim 8, wherein the commanding (110), processing (120), estimating (130), and updating (140) steps are conducted according to the one or more first commanded full rotations when a number of transmitter tags (50a,50b) classified in the first category exceeds a predetermined tag threshold in a given observation period.

11. The method (100) of any one of claims 8-10, wherein the commanding (110), processing (120), estimating (130), and updating (140) steps are conducted according to the one or more second commanded full rotations such that two or more second commanded full rotations are performed back-to-back when a time of day is within a predetermined hour range.

12. The method (100) of any one of claims 8-11, wherein the commanding (110), processing (120), estimating (130), and updating (140) steps are conducted according to the one or more first commanded full rotations when a difference between a number of transmitter tags (50a,50b) whose radio waves have been captured in one or more most recent second commanded full rotations and a number of transmitter tags whose radio waves have been captured in one or more most recent first commanded full rotations exceeds a predetermined tag difference.

13. A computing device or system (80) comprising means adapted to execute the steps of a method (100) according to any one of the preceding claims.

14. An antenna assembly (10a, 10b) comprising:
at least one antenna (15a-15c); and
at least one motor (12) for rotation of the at least one antenna around at least one rotation axis (17a, 17b);
wherein each antenna of the at least one antenna is at least linearly polarized, dual-linearly polarized or circularly polarized;
wherein the antenna assembly preferably has at least four different linear polarizations, with first and second linear polarizations thereof being perpendicular one another, and third and fourth linear polarizations thereof being perpendicular one another.

15. A system comprising:
at least one antenna assembly (10a,10b) according to claim 14; and
a computing device or system (80) according to claim 13 communicatively coupled with each antenna assembly of the at least one antenna assembly.
